(19) Europäisches Patentamt / European Patent Office / Office européen des brevets

(11) **EP 4 364 218 B1**

(12) # EUROPEAN PATENT SPECIFICATION

(45) Date of publication and mention of the grant of the patent:
**16.07.2025 Bulletin 2025/29**

(21) Application number: **22734271.4**

(22) Date of filing: **15.06.2022**

(51) International Patent Classification (IPC):
***H01M 4/525*** *(2010.01)* ***C01G 53/00*** *(2025.01)*

(52) Cooperative Patent Classification (CPC):
**C01G 53/50; H01M 4/131; H01M 4/525; H01M 4/621; H01M 4/625;** C01P 2002/60; C01P 2004/61; C01P 2006/12; C01P 2006/40; H01M 10/0525; Y02E 60/10

(86) International application number:
**PCT/EP2022/066302**

(87) International publication number:
**WO 2023/274726 (05.01.2023 Gazette 2023/01)**

(54) **PARTICULATE MATERIAL, METHOD FOR ITS MANUFACTURE AND USE**

TEILCHENFÖRMIGES MATERIAL, VERFAHREN ZU DESSEN HERSTELLUNG UND VERWENDUNG

MATÉRIAU PARTICULAIRE, SON PROCÉDÉ DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2021 EP 21183567**

(43) Date of publication of application:
**08.05.2024 Bulletin 2024/19**

(73) Proprietor: **BASF SE**
**67056 Ludwigshafen am Rhein (DE)**

(72) Inventors:
- **LEE, Robert Matthew**
  **67056 Ludwigshafen (DE)**
- **RIEWALD, Felix Florian**
  **67056 Ludwigshafen (DE)**
- **KURZHALS, Philipp**
  **67056 Ludwigshafen (DE)**
- **SOMMER, Heino**
  **76344 Eggenstein-Leopoldshafen (DE)**

(74) Representative: **BASF IP Association**
**BASF SE**
**GBI - Z078**
**67056 Ludwigshafen (DE)**

(56) References cited:
**EP-A1- 2 835 353**
**WO-A1-2020/094716**
**WO-A1-2020/260102**
**US-A1- 2018 138 507**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 364 218 B1

## Description

The present invention is directed towards a particulate material of the composition $(Li_aMg_b)_{1+x}(Ni_cM^1{}_dM^2{}_e)_{1-x}O_2$ wherein

$M^1$ is selected from Ti, Zr, Nb, Mo, and W, and combinations of at least two of the aforementioned,

$M^2$ is selected from Al, Co and Mn and combinations of at least two of the aforementioned,

a : b is in the range of from 100:1 to 400:1, and a + b = 1,

c : d is in the range of from 40:1 to 250:1, and c : e is in the range of from 12:1 to 50:1,

and c + d + e = 1,

total molar ratio of (Li + Mg) to (Ni + $M^1$ + $M^2$) is in the range of from 1:1 to 1.05:1,

$$0.00 \le x \le 0.05,$$

wherein said particulate material has an average particle diameter (D50) in the range of from 2 to 20 μm.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as hydroxides that may or may not be basic. The precursor is then mixed with a lithium salt such as, but not limited to LiOH, $Li_2O$ or - especially - $Li_2CO_3$ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1000°C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln.

In order to improve the capacity of cathode active materials, it has been suggested to select as high a nickel content as possible. However, in materials such as $LiNiO_2$, it has been observed that poor cycle life, pronounced gassing and a strong increase of the internal resistance during cycling provide high challenges for a commercial application.

Document US 2018/138507 discloses a lithium-magnesium-nickel-titanium-manganese composite oxide cathode material represented by a chemical formula $(Li_{1+x-2y}M_y)(Ni_mTi_nMn_{1-m-n})_{1-x}O_2$, wherein M represents Mg, and x, y, m and n are numbers that satisfy $0.20 \le x \le 0.28$, $0 < y < 0.03$, $0.1 < m < 0.3$ and $0 \le n \le 0.2$.

Accordingly, the particulate material as defined at the outset has been found, hereinafter also defined as inventive material or as material according to the current invention. The inventive material shall be described in more detail below.

Inventive material has a composition according to the formula $(Li_aMg_b)_{1+x}(Ni_cM^1{}_dM^2{}_e)_{1-x}O_2$ wherein

$M^1$ is selected from Ti, Zr, Nb, Mo, and W, and combinations of at least two of the aforementioned,
$M^2$ is selected from Al, Co and Mn and combinations of at least two of the aforementioned, a : b is in the range of from 100:1 to 400:1, and a + b = 1,
c : d is in the range of from 40:1 to 250:1, and c : e is in the range of from 12:1 to 50:1,
and c + d + e = 1,
total molar ratio of (Li + Mg) to (Ni + $M^1$ + $M^2$) is in the range of from 1:1 to 1.05:1,

$$0.00 \le x \le 0.05,$$

wherein said particulate material has an average particle diameter (D50) in the range of from 2 to 20 $\mu$m.

This corresponds to the formula $(Li_aMg_b)_{1+x}TM_{1-x}O_2$ wherein TM is $(Ni_{1-x1-x2}M^1{}_{x1}M^2{}_{x2})$ with $x1 \geq 0.0025$ and $x2 \geq 0.05$ and $x1 + x2 \leq 0.0525$.

The inventive material will be described in more detail below.

In one embodiment of the present invention, inventive material is comprised of spherical particles, that are particles having a spherical shape. Spherical particles shall include not just those which are exactly spherical but also those particles in which the maximum and minimum diameter of at least 90% (number average) of a representative sample differ by not more than 10%.

The inventive material has an average particle diameter (D50) in the range of from 2 to 20 $\mu$m, preferably from 5 to 16 $\mu$m. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the inventive material is comprised of secondary particles that are agglomerates of primary particles. Preferably, the inventive material is comprised of spherical secondary particles that are agglomerates of primary particles. Even more preferably, inventive material is comprised of spherical secondary particles that are agglomerates of spherical primary particles or platelets.

In one embodiment of the present invention, primary particles of inventive material have an average diameter in the range from 1 to 2000 nm, preferably from 10 to 1000 nm, particularly preferably from 50 to 500 nm. The average primary particle diameter can, for example, be determined by SEM or TEM. SEM is an abbreviation of scanning electron microscopy, TEM is an abbreviation of transmission electron microscopy, and XRD stands for X-ray diffraction.

In one embodiment of the present invention, the inventive material has a specific surface (BET), hereinafter also referred to as "BET surface", in the range of from 0.1 to 2.0 $m^2/g$. The BET surface may be determined by nitrogen adsorption after outgassing of the sample at 200 °C for 30 minutes or more and beyond this in accordance with DIN ISO 9277:2010.

$M^1$ is selected from Ti, Zr, Nb, Mo, and W, and combinations of at least two of the aforementioned, preferably $M^1$ is selected from combinations of at least two of Ti, Zr, Nb, Mo, and W, for example combinations of Ti and Zr or combinations of Zr and Mo or combinations of Ti and Zr and Mo.

$M^2$ is selected from Al, Co and Mn and combinations of at least two of the aforementioned,

a : b is in the range of from 100:1 to 400:1, and a + b = 1,

c : d is in the range of from 40:1 to 250:1, and c : e is in the range of from 12:1 to 50:1,

and c + d + e = 1,

total molar ratio of (Li + Mg) to (Ni + $M^1$ + $M^2$) is in the range of from 1:1 to 1.05:1,

$$0.00 \leq x \leq 0.05,$$

Some metals are ubiquitous metals such as sodium, calcium or zinc, but such traces will not be taken into account in the description of the present invention. Traces in this context will mean amounts of 0.05 mol-% or less, referring to the total metal content TM. Preferably, the calcium content of inventive material is only traces, and no compound of calcium is deliberately added during manufacture.

In one embodiment of the present invention, said material comprises a combination of metals according to formula (I)

$$(Ni_cM^1{}_dM^2{}_e) \qquad (I)$$

with

$M^2$ being selected from Mn and Co,
c being in the range of from 0.95 to 0.995,
d being in the range of from 0.002 to 0.04,
e being in the range of from 0.002 to 0.02, and
c + d + e = 1. In a preferred embodiment, $b \leq c$.

$M^1$ is selected from Nb, Ti, Zr, W, and Mo and preferably from combinations of at least two of the aforementioned, and $M^2$ is selected from Al, Mn, and Co and combinations of at least two of the aforementioned.

In one embodiment of the present invention, $M^1$ is selected from Ti, Zr and W, and combinations of two of the aforementioned.

In one embodiment of the present invention the number of metals other than Ni, Mg and Li is at least three and at most five. More preferably, only one element $M^2$ is present.

In one embodiment of the present invention, metal(s) $M^1$ is/are each present in a molar percentage with reference to Ni in the range of from 0.1 to 0.5.

In one embodiment of the present invention, metal(s) $M^2$ are each present in a molar percentage with reference to Ni in the range of from 0.5 to 2.

In one embodiment of the present invention, $M^1$ and $M^2$ are homogeneously dispersed within the inventive material. That means that $M^1$ and $M^2$ are about uniformly distributed over the particles of inventive material.

In one embodiment of the present invention, at least one of $M^1$ and $M^2$ are enriched in the particle boundaries of particles of inventive material.

In a specific embodiment of the present invention, secondary particles of inventive material are coated with a metal oxide, preferably with a metal oxide that does not serve as a cathode active material. Examples of suitable metal oxides are $LiBO_2$, $B_2O_3$, $Al_2O_3$, $Y_2O_3$, $LiAlO_2$, $TiO_2$, $ZrO_2$, $Li_2ZrO_3$, $Nb_2O_5$, and $LiNbO_3$.

Inventive materials are particularly suitable as cathode active materials for lithium ion batteries. They combine good cycling stability with a high energy density.

In one embodiment of the present invention inventive cathode active material contains in the range of from 0.001 to 1 % by weight $Li_2CO_3$, determined by titration as $Li_2CO_3$ and referring to said inventive material.

Another aspect of the present invention relates to a process for making inventive materials, hereinafter also referred to as inventive process or process according to the (present) invention. The inventive process comprises several steps, hereinafter also referred to as step (a), step (b) etc.

Steps (a) to (c) are characterized as follows:

(a) providing a particulate nickel hydroxide, nickel (II) oxide or nickel oxyhydroxide,

(b) mixing said nickel oxide/hydroxide with compounds of Mg, of $M^1$ and $M^2$, in the absence of solvent, and with a source of lithium,

(c) treating the mixture obtained from step (b) thermally.

Steps (a) to (c) are described in more detail below.

In step (a), a particulate nickel hydroxide, nickel (II) oxide or nickel oxyhydroxide is provided, hereinafter altogether also referred to as nickel oxide/hydroxide. In the context of the present invention, the term nickel oxyhydroxide is not limited to stoichiometric NiOOH but to any compound of nickel that bears only oxide and hydroxide counterions and a maximum individual content of impurities of 2% by weight of metals such as Mn or Mg, referring to the total metal content of said nickel hydroxide, nickel (II) oxide or nickel oxyhydroxide. Preferably, nickel hydroxide, nickel (II) oxide or nickel oxyhydroxide has a maximum total impurity content of 2% by weight, referring to the total metal content of said nickel hydroxide, nickel (II) oxide or nickel oxyhydroxide.

The nickel oxide/hydroxide provided in step (a) has an average particle diameter (D50) in the range of from 2 to 20 $\mu$m, preferably from 4 to 16 $\mu$m. The average particle diameter can be determined, e. g., by light scattering or LASER diffraction or electroacoustic spectroscopy. The particles may be composed of agglomerates from primary particles, and the above particle diameter refers to the secondary particle diameter.

A preferred nickel oxide/hydroxide is freshly precipitated nickel hydroxide.

In one embodiment of the present invention, the nickel oxide/hydroxide provided in step (a) has a residual moisture content in the range of from 50 to 1,000 ppm, preferably from 100 to 400 ppm. The residual moisture content may be determined by Karl-Fischer titration.

In step (b), said nickel oxide/hydroxide is mixed with compounds of Mg and $M^1$ and $M^2$, in the absence of solvents such as water or organic solvents.

Suitable compounds of Mg are $Mg(OH)_2$, MgO, $Mg(NO_3)_2$, and oxalates such as $MgC_2O_4$.

Suitable compounds of $M^1$ are oxides, (oxy)hydroxides and nitrates of Ti, of Zr, of W, of Mo, and of Nb, such as $TiO_2$, $Ti_2O_3$, $TiO(OH)_2$, $ZrO_2$, $Zr(OH)_4$, $TiO(NO_3)_2$, $Ti(NO_3)_4$, niobic acid, $Nb_2O_5$, $WO_3$, $Li_2WO_4$, and $MoO_3$. Further examples of compounds of $M^1$ are for instance but not limited to ammonium metatungstate (hydrate), ammonium orthomolybdate, ammonium heptamolybdate, ammonium dimolybdate, ammonium niobate oxalate, ammonium zirconium (IV) carbonate, either as such or as hydrates.

Suitable compounds of $M^2$ are nitrates, oxides, hydroxides and oxyhydroxides, for example $Al_2O_3$, $Al(OH)_3$, AlOOH, $Al_2(SO_4)_3$, $KAl(SO_4)_2$, and $Al(NO_3)_3$, alkanolates of Al such as, but not limited to $Al(C_2H_5O)_3$, Al-tris-isopropoxide, mixed salts of at least 2 cations such as aluminum magnesium isopropoxide. Examples of compound of cobalt are

$Co(OH)_2$, $Co_2O_3$, $Co_3O_4$, and examples of compounds of Mn are $Mn_2O_3$, $MnO_2$, and $Mn(NO_3)_2$. Alkanolates of $M^2$ are possible as well.

In addition, a source of lithium is added.

Examples of sources of lithium are $Li_2O$, LiOH, and $Li_2CO_3$, each water-free or as hydrate, if applicable, for example $LiOH \cdot H_2O$. Preferred example is lithium hydroxide.

The amounts of source of lithium and of powdery residue is selected in a way that the molar ratio of Li and TM is (1+x) to 1, with x being in the range of from 0.98 to 1.05.

Said source of lithium is preferable in particulate form, for example with an average diameter (D50) in the range of from 3 to 10 μm, preferably from 5 to 9 μm.

In one embodiment of the present invention, step (b) is performed at a temperature in the range of from 5 to 85 °C, preferred are 10 to 60 °C.

In one embodiment of the present invention, step (b) is performed at normal pressure. It is preferred, though, to perform step (b) under elevated pressure, for example at 10 mbar to 10 bar above normal pressure, or with suction, for example 50 to 250 mbar below normal pressure, preferably 100 to 200 mbar below normal pressure.

Step (b) may be performed, for example, in a vessel that can be easily discharged, for example due to its location above a filter device. Such vessel may be charged with nickel oxide/hydroxide from step (a) followed by introduction of source of lithium and of compounds of Mg and $M^1$ and $M^2$. In another embodiment, such vessel is charged with source of lithium and with compounds of Mg and $M^1$ and $M^2$ followed by introduction of nickel oxide/hydroxide from step (a). In another embodiment, nickel oxide/hydroxide from step (a) and compounds of Mg and $M^1$ and $M^2$ and source of lithium are introduced simultaneously.

Mixing of the nickel oxide/hydroxide with the compounds of Mg and $M^1$ and $M^2$ and the source of lithium may take place over a period of from 1 minute to 3 hours, preferably from 5 minutes to 1 hour, even more preferably from 5 to 30 minutes.

Step (b) may be supported by mixing operations, for example shaking or in particular by stirring or shearing, see below.

A powdery mixture is obtained from step (b).

Examples of suitable apparatuses for performing step (b) are high-shear mixers, tumbler mixers, plough-share mixers and free fall mixers.

In one embodiment of the present invention, step (b) is performed at a temperature in the range of from ambient temperature to 200°C, preferably 20 to 50 °C.

A mixture is obtained.

Step (c) includes subjecting said mixture from step (b) to a thermal treatment. Examples of step (c) are heat treatments at a temperature in the range of from 600 to 800°C, preferably 650 to 750 °C. The terms "treating thermally" and "heat treatment" are used interchangeably in the context of the present invention.

In one embodiment of the present invention, the mixture obtained from step (b) is heated to 600 to 800 °C with a heating rate of 0.1 to 10 °C/min.

In one embodiment of the present invention, the temperature is ramped up before reaching the desired temperature of from 600 to 800°C, preferably 650 to 750 °C. For example, first the mixture obtained from step (c) is heated to a temperature to 350 to 550 °C and then held constant for a time of 10 min to 4 hours, and then it is raised to 650 °C up to 800 °C and then held at 650 to 800 for 10 minutes to 10 hours.

In one embodiment of the present invention, step (c) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (c) is performed in an oxygen-containing atmosphere, for example in a nitrogen-air mixture, in a rare gas-oxygen mixture, in air, in oxygen or in oxygen-enriched air. In a preferred embodiment, the atmosphere in step (c) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In one embodiment of the present invention, step (c) is performed under a stream of gas, for example air, oxygen and oxygen-enriched air. Such stream of gas may be termed a forced gas flow. Such stream of gas may have a specific flow rate in the range of from 0.5 to 15 $m^3/h \cdot kg$ material according to general formula $(Li_aMg_b)_{1+x}(Ni_cM^1_dM^2_e)_{1-x}O_2$. The volume is determined under normal conditions: 298 Kelvin and 1 atmosphere. Said stream of gas is useful for removal of gaseous cleavage products such as water and carbon dioxide.

The inventive process may include further steps such as, but not limited, additional calcination steps at a temperature in the range of from 650 to 800 °C subsequently to step (c).

In one embodiment of the present invention, step (c) has a duration in the range of from one hour to 30 hours.

Preferred are 10 to 24 hours. The time at a temperature above 600 °C is counted, heating and holding but the cooling time is neglected in this context.

A material is obtained that is excellently suitable as cathode active material for lithium ion batteries.

In one embodiment of the present invention, it is possible to treat inventive material with water and subsequently drying it. In another embodiment, it is possible to at least partially coat particles of inventive material, for example by mixing it with an oxide or hydroxide, for example with aluminum hydroxide or alumina or with boric acid, followed by thermal treatment at 150 to 400°C. In another embodiment of the present invention, it is possible to at least partially coat particles of inventive material by way of atomic layer deposition methods, for example by alternating treatment(s) with trimethylaluminum and moisture.

A further aspect of the present invention are electrodes comprising at least one inventive material. They are particularly useful for lithium ion batteries. Lithium ion batteries comprising at least one electrode according to the present invention exhibit a very good discharge and cycling behavior, and they show good safety behavior.

In one embodiment of the present invention, inventive cathodes contain

(A) at least one inventive material, as described above,
(B) carbon in an electrically conductive state, and
(C) a binder,
(D) a current collector.

In a preferred embodiment of the present invention, inventive cathodes contain

(A) 80 to 98 % by weight inventive material,
(B) 1 to 17 % by weight of carbon,
(C) 1 to 10 % by weight of binder material,

percentages referring to the sum of (A), (B) and (C).

Cathodes according to the present invention contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.

Electrodes according to the present invention can comprise further components. They can comprise a current collector (D), such as, but not limited to, an aluminum foil. They further comprise a binder material (C), hereinafter also referred to as binder (C). Current collector (D) is not further described here.

Suitable binders (C) are preferably selected from organic (co)polymers. Suitable (co)polymers, i.e. homopolymers or copolymers, can be selected, for example, from (co)polymers obtainable by anionic, catalytic or free-radical (co) polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homo-polyethylene, but also copolymers of ethylene which comprise at least 50 mol% of copolymerized ethylene and up to 50 mol% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and $\alpha$-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and $\alpha$-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an

average molecular weight $M_w$ in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co) polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive electrodes may comprise 3 to 10% by weight of binder(s) (d), referring to the sum of component (a), component (b) and carbon (c).

A further aspect of the present invention is a battery, containing

(A) at least one cathode comprising inventive cathode active material (A), carbon (B), and binder (C),
(B) at least one anode, and
(C) at least one electrolyte.

Embodiments of cathode (1) have been described above in detail.

Anode (2) may contain at least one anode active material, such as carbon (graphite), $TiO_2$, lithium titanium oxide, silicon or tin. Anode (2) may additionally contain a current collector, for example a metal foil such as a copper foil.

Electrolyte (3) may comprise at least one non-aqueous solvent, at least one electrolyte salt and, optionally, additives.

Nonaqueous solvents for electrolyte (3) can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III)

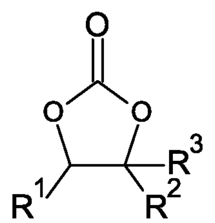

(II)

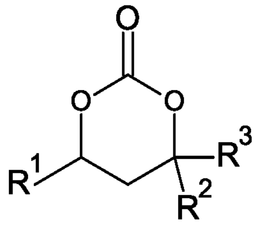

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

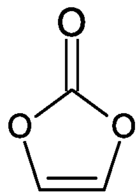

(IV)

The solvent or solvents is/are preferably used in the water-free state, i.e. with a water content in the range from 1 ppm to 0.1% by weight, which can be determined, for example, by Karl-Fischer titration.

Electrolyte (3) further comprises at least one electrolyte salt. Suitable electrolyte salts are, in particular, lithium salts. Examples of suitable lithium salts are $LiPF_6$, $LiBF_4$, $LiClO_4$, $LiAsF_e$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In a preferred embodiment of the present invention, electrolyte (3) contains at least one flame retardant. Useful flame retardants may be selected from trialkyl phosphates, said alkyl being different or identical, triaryl phosphates, alkyl dialkyl phosphonates, and halogenated trialkyl phosphates. Preferred are tri-$C_1$-$C_4$-alkyl phosphates, said $C_1$-$C_4$-alkyls being different or identical, tribenzyl phosphate, triphenyl phosphate, $C_1$-$C_4$-alkyl di- $C_1$-$C_4$-alkyl phosphonates, and fluorinated tri-$C_1$-$C_4$-alkyl phosphates,

In a preferred embodiment, electrolyte (3) comprises at least one flame retardant selected from trimethyl phosphate, $CH_3$-P(O)($OCH_3$)$_2$, triphenylphosphate, and tris-(2,2,2-trifluoroethyl)phosphate.

Electrolyte (3) may contain 1 to 10% by weight of flame retardant, based on the total amount of electrolyte.

In an embodiment of the present invention, batteries according to the invention comprise one or more separators (4) by means of which the electrodes are mechanically separated. Suitable separators (4) are polymer films, in particular porous polymer films, which are unreactive toward metallic lithium. Particularly suitable materials for separators (4) are polyolefins, in particular film-forming porous polyethylene and film-forming porous polypropylene.

Separators (4) composed of polyolefin, in particular polyethylene or polypropylene, can have a porosity in the range from 35 to 45%. Suitable pore diameters are, for example, in the range from 30 to 500 nm.

In another embodiment of the present invention, separators (4) can be selected from among PET nonwovens filled with inorganic particles. Such separators can have a porosity in the range from 40 to 55%. Suitable pore diameters are, for example, in the range from 80 to 750 nm.

Batteries according to the invention can further comprise a housing which can have any shape, for example cuboidal or the shape of a cylindrical disk. In one variant, a metal foil configured as a pouch is used as housing.

Batteries according to the invention provide a very good discharge and cycling behavior, in particular at high temperatures (45 °C or higher, for example up to 60 °C) in particular with respect to the capacity loss.

Batteries according to the invention can comprise two or more electrochemical cells that combined with one

another, for example can be connected in series or connected in parallel. Connection in series is preferred. In batteries according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by working examples.

Average particle diameters (D50) were determined by dynamic light scattering ("DLS"). Percentages are % by weight unless specifically noted otherwise. All thermal processes were performed under an oxygen flow rate of 5 liters per minute in the furnace.

Step (a.1): A spherical $Ni(OH)_2$ precursor was obtained by combining aqueous nickel sulfate solution (1.65 mol/kg solution) with an aqueous 25 wt.% NaOH solution and using ammonia as complexation agent. The pH value was set at 12.6. The freshly precipitated $Ni(OH)_2$ was washed with water, sieved and dried at 120°C for 12 hours. p-CAM.1 was $Ni(OH)_2$ with a D50 of 8 μm.

Manufacture of a comparative cathode active material, C-CAM.1:

Comparative cathode material C-CAM.1 ($Li_{1.01}Ni_{0.05}Al_{0.005}Co_{0.02}Mn_{0.02}Zr_{0.005}O_2$) was synthesized by mixing the precursor p-CAM.1 with the lithium source $LiOH{\cdot}H_2O$ and dopant precursors ($Co_3O_4$, $Al_2O_3$, $Zr(OH)_4$, $MnO_2$) in appropriate stoichiometric ratios in a ball mill for 3 hours. The mixture was then poured into a zirconia crucible and heated from 25 °C to 400 °C at 3 °C/min, and then held at 400°C for 4 hours. The mixture was then heated from 400 °C to 692 °C at 3 °C/min, and then held at 692 ˚C for 6 hours. Finally, the fixture was cooled from 692 °C to 120 °C at a cooling rate of more than 10 °C/min and then transferred to a glovebox to obtain the comparative material C-CAM.1 with a d50 of 8 μm.

Step (b.2): the precursor p-CAM.1 was mixed with the lithium source $LiOH{\cdot}H_2O$ and the sources of Mg, $M^1$ and $M^2$: $Mg(OH)_2$, $Al_2O_3$, $Co_3O_4$, $MnO_2$, $Zr(OH)_4$, $WO_3$) in appropriate stoichiometric ratios in a ball mill for 3 hours.

Step (c.2): The mixture obtained from (b.2) was then poured into a zirconia crucible and heated from 25 °C to 400 °C at 3 °C/min, and then held at 400°C for 4 hours. The mixture was then heated from 400 °C to 675 °C at 3 °C/min, and then held at 675 °C for 6 hours. Finally, the fixture was cooled from 675 °C to 120 °C at a cooling rate of more than 10 °C/min and transferred to a glovebox to obtain the inventive material CAM.2 with a d50 of 8°μm. Inventive cathode material CAM.2 ($(Li_{1.030}Mg_{0.020})Ni_{0.970}Al_{0.005}Co_{0.005}MnN_{0.010}Zr_{0.005}W_{0.005}O_2$) was obtained.

Electrode manufacture: Electrodes contained 94% CAM, 3% carbon black (Super C65) and 3% binder (polyvinylidene fluoride, Solef 5130). CAM, carbon black and binder were slurried in N-methyl-2-pyrrolidone and cast onto aluminum foil by doctor blade. After drying of the electrodes 6 h at 105 °C in vacuo, circular electrodes were punched, weighed and dried at 120 °C under vacuum for 12 hours before entering in an Ar filled glove box.

Half-Cell Electrochemical Measurements: Coin-type electrochemical cells, were assembled in an argon-filled glovebox. The positive 14 mm diameter (loading 8.0±0.5 mg $cm^{-2}$) electrode was separated from the 0.58 thick Li foil by a glass fiber separator (Whatman GF/D). An amount of 95 μl of 1 M $LiPF_6$ in ethylene carbonate (EC): ethylmethyl carbonate (EMC), 3:7 by weight, was used as the electrolyte. Cells were galvanostatically cycled at a Maccor 4000 battery cycler between 3.1 and 4.3 V at room temperature by applying the following C-rates until 70 % of the initial discharge capacity is reached at a certain discharge step:

Table 1: Electrochemical test procedure of the coin half cells.

| | Charge | Discharge |
|---|---|---|
| Cycles 1 - 2 | 0.1 C | 0.1 C |
| Cycles 3 - 5 | 0.5 C+ CV* | 0.2 C |
| Cycle 6 | 0.5 C + CV* | 0.1 C |
| Cycle 7 | 0.5 C + CV* | 0.2 C |
| Cycle 8 | 0.5 C + CV* | 0.5 C |
| Cycle 9 | 0.5 C + CV | 1C |
| Cycle 10 | 0.5 C + CV | 2C |
| Cycle 11 | 0.5 C + CV* | 0.1 C |
| Cycle 12 | Resistance measurement (DCiR) | |

(continued)

| | Charge | Discharge |
|---|---|---|
| Cycles 13 - 62 | 0.5 C + CV* | 1.0 C |
| Cycle 63 | 0.5 C + CV* | 0.1 C |
| Cycle 64 | Resistance measurement (DCiR) | |
| Cycles 65 - 114 | 0.5 C + CV* | 1.0 C |
| Cycle 115 | 0.5 C + CV* | 0.1 C |
| Cycle 116 | Resistance measurement | |

After charging at the listed C-rates, all charge steps except the first were finished by a constant voltage step (CV*) for 1 h, or until the current reached 0.02C.

During the resistance measurement (conducted every 25 cycles at 25 °C), the cell was charged at 0.1 C to reach 50% state of charge, relative to the previous discharge capacity. To equilibrate the cell, a 30 min open circuit step followed. Finally, a 2.5 C discharge current was applied for 30 s to measure the resistance. At the end of the current pulse, the cell was again equilibrated for 30 min in open circuit and further discharged at 0.1 C to 3 .0 V.

To calculate the resistance, the voltage before applying the 2.5 C pulse current, V0s, and after 30 s of 2.5 C pulse current, V30 s, as well as the 2.5 C current value, (j in A), were taken. The resistance was calculated according to Eq. 3 (V: voltage, j: 2.5C pulse current).

$$R = (V0s-V30s)/j \qquad \text{(Eq. 3)}$$

The results show an improvement in the 1C rate and a higher stability after 140 (1C) and 141 (0,1C) cycles. In addition, the resistance growth is less compared to the comparative experiment.

Table 2: Results of electrochemical testing

| | 1C Capacity / mAh/g | Cycle140/Cycle 15 (1C) / % | Cycle141/Cycle13 (0.1C) / % | 50% SoC after 142 cycles ($\Omega \cdot cm^2$) |
|---|---|---|---|---|
| C-CAM.1 | 177.1 | 72.1 | 80.2 | 65.8 |
| CAM.2 | 183 | 78.9 | 82.8 | 37.4 |
| SoC: state of charge | | | | |

## Claims

1. Particulate material of the composition $(Li_aMg_b)_{1+x}(Ni_cM^1_dM^2_e)_{1-x}O_2$ wherein

   $M^1$ is selected from Ti, Zr, Nb, Mo, and W, and combinations of at least two of the aforementioned,
   $M^2$ is selected from Al, Co and Mn and combinations of at least two of the aforementioned,
   a : b is in the range of from 100:1 to 400:1, and a + b = 1,
   c : d is in the range of from 40:1 to 250:1, and c : e is in the range of from 12:1 to 50:1, and c + d + e = 1,
   total molar ratio of (Li + Mg) to (Ni + $M^1$ + $M^2$) is in the range of from 1:1 to 1.05:1,

   $$0.00 \leq x \leq 0.05,$$

   wherein said particulate material has an average particle diameter (D50) in the range of from 2 to 20 μm.

2. Particulate material according to claim 1 wherein said material comprises a combination of metals according to general formula (I)

$(Ni_cM^1_dM^2_e)$ (I)

with

$M^2$ being selected from Mn and Co,
c being in the range of from 0.95 to 0.995,
d being in the range of from 0.002 to 0.04,
e being in the range of from 0.002 to 0.02, and
c + d + e = 1.

**3.** Particulate material according to claim 1 or 2 wherein $M^1$ is selected from Ti, Zr and W, and combinations of at least two of the aforementioned.

**4.** Particulate material according to any of claims the number of metals other than Ni, Mg and Li is at least three and at most five.

**5.** Particulate material according to any of the preceding claims wherein said material has an integral peak width $^{2nd\,charge}IPW_{4.1\text{-}4.25\,V}$ in the differential capacity plot (dQ)/(dV) of at least 25 mV between 4.1 and 4.25 V in the second charge cycle at 0.2 C-rate.

**6.** Particulate material according to any of the preceding claims wherein said material is coated with a metal oxide.

**7.** Process for manufacturing a particulate material according to any of claims 1 to 6 wherein said process comprises the following steps:

(a) providing a particulate nickel hydroxide, nickel (II) oxide or nickel oxyhydroxide,
(b) mixing said nickel oxide/hydroxide or oxyhydroxide with compounds of Mg, of $M^1$ and $M^2$, and with a source of lithium,
(c) treating the mixture obtained from step (b) thermally.

**8.** Process according to claim 7 wherein step (c) is performed at a maximum temperature in the range of from 650 to 750 °C.

**9.** Cathode containing

(A) at least one particulate material according to any of claims 1 to 6,
(B) carbon in electrically conductive form,
(C) a binder material.

**10.** Cathode according to claim 9 containing

(A) 80 to 98 % by weight cathode active material,
(B) 1 to 17 % by weight of carbon,
(C) 3 to 10 % by weight of binder material,

percentages referring to the sum of (A), (B) and (C).

**11.** Electrochemical cell containing at least one cathode according to claim 9 or 10.

**Patentansprüche**

**1.** Partikelmaterial der Zusammensetzung $(Li_aMg_b)_{1+x}(Ni_cM^1_dM^2_e)_{1-x}O_2$, wobei

$M^1$ ausgewählt wird aus Ti, Zr, Nb, Mo und W und Kombinationen aus mindestens zwei der vorgenannten,
M2 ausgewählt wird aus Al, Co und Mn und Kombinationen aus mindestens zwei der vorgenannten,
a : b liegt im Bereich von 100:1 bis 400:1 und a + b = 1,
c : d liegt im Bereich von 40:1 bis 250:1 und c : e im Bereich von 12:1 bis 50:1,

und $c + d + e = 1$,
das Gesamtmolverhältnis von (Li + Mg) zu (Ni + $M^1$ + $M^2$) liegt im Bereich von 1:1 bis 1,05:1,

$$0,00 \leq x \leq 0,05,$$

wobei das Partikelmaterial einen durchschnittlichen Partikeldurchmesser (D50) im Bereich von 2 bis 20 µm aufweist.

**2.** Partikelmaterial nach Anspruch 1, wobei das Material eine Kombination von Metallen nach der allgemeinen Formel (I) umfasst

$$(Ni_cM^1_dM^2_e) \qquad (I)$$

wobei

$M^2$ wird aus Mn und Co gewählt,
c liegt im Bereich von 0,95 bis 0,995,
d liegt im Bereich von 0,002 bis 0,04,
e liegt im Bereich von 0,002 bis 0,02 und
$c + d + e = 1$.

**3.** Partikelmaterial nach Anspruch 1 oder 2, wobei $M^1$ ausgewählt ist aus Ti, Zr und W und Kombinationen aus mindestens zwei der vorgenannten.

**4.** Partikelmaterial nach einem der Ansprüche beträgt die Anzahl der Metalle außer Ni, Mg und Li mindestens drei und höchstens fünf.

**5.** Partikelmaterial nach einem der vorhergehenden Ansprüche, wobei das Material eine integrale Peakbreite $^{2.\ Ladung}$ $IPW_{4,1\ -\ 4,25\ V}$ im Differentialkapazitätsplot (dQ)/(dV) von mindestens 25 mV zwischen 4,1 und 4,25 V im zweiten Ladezyklus bei einer Rate von 0,2 C aufweist.

**6.** Partikelmaterial nach einem der vorhergehenden Ansprüche, wobei das Material mit einem Metalloxid beschichtet ist.

**7.** Verfahren zur Herstellung eines partikelförmigen Materials nach einem der Ansprüche 1 bis 6, wobei das Verfahren die folgenden Schritte umfasst:

(a) mit einem partikulären Nickelhydroxid, Nickel(II)-oxid oder Nickeloxyhydroxid,
(b) Mischen des Nickeloxids/Hydroxids oder Oxyhydroxids mit Verbindungen von Mg, von $M^1$ und $M^2$ und mit einer Lithiumquelle,
(c) Thermische Behandlung des aus Schritt b) erhaltenen Gemisches.

**8.** Verfahren nach Anspruch 7, wobei Schritt (c) bei einer maximalen Temperatur im Bereich von 650 bis 750 °C durchgeführt wird.

**9.** Kathode mit

(A) mindestens ein Partikelmaterial nach einem der Ansprüche 1 bis 6,
(B) Kohlenstoff in elektrisch leitfähiger Form,
(C) ein Bindemittel.

**10.** Kathode nach Anspruch 9 mit

(A) 80 bis 98 Gew.-% Kathodenaktivmaterial,
(B) 1 bis 17 Gew.-% Kohlenstoff,
(C) 3 bis 10 Gew.-% Bindemittel,

Prozentsätze, die sich auf die Summe von (A), (B) und (C) beziehen.

**11.** Elektrochemische Zelle, die mindestens eine Kathode nach Anspruch 9 oder 10 enthält.

## Revendications

**1.** Matière particulaire de la composition $(Li_aMg_b)_{1+x}(Ni_cM^1{}_dM^2{}_e)_{1-x}O_2$ dans laquelle

$M^1$ est choisi parmi Ti, Zr, Nb, Mo et W, et des combinaisons d'au moins deux des éléments susmentionnés,
$M^2$ est choisi parmi Al, Co et Mn et des combinaisons d'au moins deux des éléments susmentionnés,
a : b est compris entre 100:1 et 400:1, et a + b = 1,
c : d est dans la plage de 40:1 à 250:1, et c : e est dans la plage de 12:1 à 50:1,
et c + d + e = 1,
le rapport molaire total de (Li + Mg) à (Ni + $M^1$ + $M^2$) est compris entre 1:1 et 1,05:1,

$$0,00 \leq x \leq 0,05,$$

dans lequel ladite matière particulaire a un diamètre moyen de particule (D50) compris entre 2 et 20 μm.

**2.** Matériau particulaire selon la revendication 1, dans lequel ledit matériau comprend une combinaison de métaux selon la formule générale (I)

$$(Ni_cM^1{}_dM^2{}_e) \qquad (I)$$

avec

$M^2$ sélectionné parmi Mn et Co,
c étant compris entre 0,95 et 0,995,
d étant compris entre 0,002 et 0,04,
e étant compris entre 0,002 et 0,02, et
c + d + e = 1.

**3.** Matériau particulaire selon la revendication 1 ou 2, dans lequel $M^1$ est choisi parmi Ti, Zr et W, et combinaisons d'au moins deux des éléments susmentionnés.

**4.** Matériau particulaire selon l'une quelconque des revendications, le nombre de métaux autres que Ni, Mg et Li est d'au moins trois et d'au plus cinq.

**5.** Matériau particulaire selon l'une quelconque des revendications précédentes, dans lequel ledit matériau a une largeur de crête intégrale ${}^{2e\ charge}IPW_{4.1\ -\ 4,25\ V}$ dans le tracé de capacité différentielle (dQ)/(dV) d'au moins 25 mV entre 4,1 et 4,25 V dans le deuxième cycle de charge à un taux C de 0,2.

**6.** Matériau particulaire selon l'une quelconque des revendications précédentes, dans lequel ledit matériau est recouvert d'un oxyde métallique.

**7.** Procédé de fabrication d'un matériau particulaire selon l'une quelconque des revendications 1 à 6, dans lequel ledit procédé comprend les étapes suivantes :

(a) fournir un hydroxyde de nickel particulaire, de l'oxyde de nickel (II) ou de l'oxyhydroxyde de nickel,
(b) mélanger ledit oxyde/hydroxyde de nickel ou oxyhydroxyde avec des composés de Mg, de $M^1$ et de $M^2$, et avec une source de lithium,
(c) Traitement thermique du mélange obtenu à l'étape (b).

**8.** Procédé selon la revendication 7, dans lequel l'étape (c) est réalisée à une température maximale comprise entre 650 et 750 °C.

**9.** Cathode contenant

(A) au moins une matière particulaire selon l'une quelconque des revendications 1 à 6,
(B) carbone sous forme conductrice d'électricité,
(C) un liant.

**10.** Cathode selon la revendication 9, contenant

(A) 80 à 98 % en poids de matériau actif de cathode,
(B) 1 à 17 % en poids de carbone,
(C) 3 à 10 % en poids de liant,

pourcentages se rapportant à la somme des points (A), (B) et (C).

**11.** Pile électrochimique contenant au moins une cathode selon la revendication 9 ou 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2018138507 A